# EUROPEAN PATENT SPECIFICATION

(11) **EP 3 950 750 B1**
(45) Date of publication and mention of the grant of the patent: **05.06.2024**
(21) Application number: 20785088.4
(22) Date of filing: 19.03.2020
(51) Int. Cl.: C08F 297/04, C08L 53/02, H01M 4/13, H01M 4/62, H01M 10/0525

(54) **BINDER COMPOSITION FOR NON-AQUEOUS SECONDARY BATTERY, SLURRY COMPOSITION FOR NON-AQUEOUS SECONDARY BATTERY ELECTRODE, ELECTRODE FOR NON-AQUEOUS SECONDARY BATTERY, AND NON-AQUEOUS SECONDARY BATTERY**
BINDEMITTELZUSAMMENSETZUNG FÜR NICHT-WÄSSRIGE SEKUNDÄRBATTERIE, SLURRYZUSAMMENSETZUNG FÜR NICHT-WÄSSRIGE SEKUNDÄRBATTERIE-ELEKTRODE, ELEKTRODE FÜR NICHT-WÄSSRIGE SEKUNDÄRBATTERIE, UND NICHT-WÄSSRIGE SEKUNDÄRBATTERIE
COMPOSITION DE LIANT POUR BATTERIE SECONDAIRE NON AQUEUSE, COMPOSITION DE BOUE POUR ÉLECTRODE DE BATTERIE SECONDAIRE NON AQUEUSE, ÉLECTRODE POUR BATTERIE SECONDAIRE NON AQUEUSE ET ÉLECTRODE POUR BATTERIE SECONDAIRE NON AQUEUSE ÉLECTRODE POUR BATTERIE SECONDAIRE NON AQUEUSE, ÉLECTRODE POUR BATTERIE SECONDAIRE NON AQUEUSE, ET BATTERIE SECONDAIRE NON AQUEUSE

(30) Priority: 29.03.2019 JP 2019067948
(43) Date of publication of application: 09.02.2022
(73) Proprietor: Zeon Corporation, Tokyo 100-8246 (JP)
(72) Inventor: MASUDA, Ai, Tokyo 100-8246 (JP); KIDOKORO, Hiroto, Tokyo 100-8246 (JP)
(74) Representative: Maiwald GmbH
(86) International application number: PCT/JP2020/012489
(87) International publication number: WO 2020/203371

(56) References cited:
- EP-A1- 2 264 101
- WO-A1-2010/074270
- WO-A1-2015/098507
- WO-A1-2018/168420
- WO-A1-2019/039560
- WO-A1-2019/044166
- WO-A2-2013/065738
- JP-A- S63 286 413
- JP-A- 2012 077 158
- JP-A- 2016 166 283
- US-A1- 2016 204 439

## Description

### TECHNICAL FIELD

The present disclosure relates to a binder composition for a non-aqueous secondary battery, a slurry composition for a non-aqueous secondary battery electrode, an electrode for a non-aqueous secondary battery, and a non-aqueous secondary battery.

### BACKGROUND

Non-aqueous secondary batteries (hereinafter, also referred to simply as "secondary batteries") such as lithium ion secondary batteries have characteristics such as compact size, light weight, high energy density, and the ability to be repeatedly charged and discharged, and are used in a wide range of applications. Consequently, in recent years, studies have been made to improve battery members such as electrodes for the purpose of achieving even higher non-aqueous secondary battery performance.

An electrode used in a secondary battery such as a lithium ion secondary battery normally includes a current collector and an electrode mixed material layer (positive electrode mixed material layer or negative electrode mixed material layer) formed on the current collector. This electrode mixed material layer is formed by, for example, applying a slurry composition containing an electrode active material, a binder-containing binder composition, and so forth onto the current collector, and then drying the applied slurry composition.

In order to further improve the performance of secondary batteries, attempts have been made in recent years to improve binder compositions used in electrode mixed material layer formation.

As one specific example, Patent Literature (PTL) 1 proposes a binder composition for a non-aqueous secondary battery electrode containing a particulate polymer A that is a copolymer including a block region formed of an aromatic vinyl monomer unit and a particulate polymer B that is a random copolymer including an aliphatic conjugated diene monomer unit and an aromatic vinyl monomer unit.

### CITATION LIST

### Patent Literature

PTL 1: WO2018/168420A1

### SUMMARY

### (Technical Problem)

It is desirable for an electrode of a secondary battery to have excellent flexibility from a viewpoint of enhancing battery characteristics such as cycle characteristics. In recent years, there has been demand for electrodes to have even higher flexibility from a viewpoint of increasing capacity, for example.

However, in the case of the conventional binder composition for a non-aqueous secondary battery electrode described above, there is room for further improvement of flexibility of an obtained electrode. There is also room for further improvement of a non-aqueous secondary battery including an electrode that is formed using the conventional binder composition for a non-aqueous secondary battery electrode in terms of cycle characteristics.

Accordingly, one object of the present disclosure is to provide a binder composition for a non-aqueous secondary battery and a slurry composition for a non-aqueous secondary battery electrode with which it is possible to form an electrode that has sufficiently high flexibility and can enhance cycle characteristics of an obtained secondary battery.

Another object of the present disclosure is to provide an electrode for a non-aqueous secondary battery that has sufficiently high flexibility and a non-aqueous secondary battery that includes this electrode and has excellent cycle characteristics.

### (Solution to Problem)

The inventors conducted diligent investigation with the aim of solving the problems described above. The inventors reached a new finding that by compounding a particulate polymer formed of an asymmetric block copolymer satisfying specific conditions in a binder composition, it is possible to increase flexibility of an obtained electrode extremely well and to sufficiently enhance cycle characteristics of an obtained secondary battery. In this manner, the inventors completed the present disclosure.

Specifically, the present disclosure aims to advantageously solve the problems set forth above, and a presently disclosed binder composition for a non-aqueous secondary battery comprises a particulate polymer including a block copolymer A represented by general formula (A), shown below,

Ar1^{a}-D^{a}-Ar2^{a} (A)

where, in general formula (A), Ar1^{a} indicates a block region that has a weight-average molecular weight of 5,500 to 20,000 and is formed of an aromatic vinyl monomer unit, Ar2^{a} indicates a block region that has a weight-average molecular weight of 40,000 to 400,000 and is formed of an aromatic vinyl monomer unit, and D^{a} indicates a block region that is formed of an aliphatic conjugated diene monomer unit.

Through a binder composition containing at least a specific block copolymer A having a structure in which block regions that are each formed of an aromatic vinyl monomer unit and that differ from each other in terms of weight-average molecular weight are separated by a block region that is formed of an aliphatic conjugated diene monomer unit (i.e., having an asymmetric structure) in this manner, it is possible to form an electrode that has sufficiently high flexibility and can enhance cycle characteristics of an obtained secondary battery.

Note that the term "monomer unit" as used in relation to a polymer in the present specification refers to a "repeating unit derived from the monomer that is included in a polymer obtained using the monomer". Moreover, when a polymer is said to "include a block region formed of a monomer unit" in the present specification, this means that "a section where only such monomer units are bonded in a row as repeating units is present in the polymer".

Furthermore, in the present specification, the "weight-average molecular weight" of each region included in a given block copolymer can be measured by a method described in the EXAMPLES section.

In the presently disclosed binder composition for a non-aqueous secondary battery, it is preferable that the particulate polymer further includes a block copolymer B represented by general formula (B), shown below,

Ar1^{b}-D^{b}-Ar2^{b} (B)

where, in general formula (B), Ar1^{b} and Ar2^{b} each indicate, independently of each other, a block region that has a weight-average molecular weight of 6,000 to 20,000 and is formed of an aromatic vinyl monomer unit, and D^{b} indicates a block region that is formed of an aliphatic conjugated diene monomer unit, and that a ratio of the block copolymer A is not less than 36 mass% and not more than 85 mass% when total mass of the block copolymer A and the block copolymer B is taken to be 100 mass%.

When the binder composition further contains the specific block copolymer B set forth above, cycle characteristics of an obtained secondary battery can be even further enhanced.

In the presently disclosed binder composition for a non-aqueous secondary battery, the particulate polymer preferably has a surface acid content of not less than 0.05 mmol/g and not more than 0.90 mmol/g. When the surface acid content of the particulate polymer is within the specific range set forth above, viscosity stability of a slurry composition produced using the binder composition can be increased.

Note that in the present specification, the "surface acid content" of a particulate polymer can be measured by a method described in the EXAMPLES section.

Moreover, the present disclosure aims to advantageously solve the problems set forth above, and a presently disclosed slurry composition for a non-aqueous secondary battery electrode comprises: an electrode active material; and any one of the binder compositions for a non-aqueous secondary battery set forth above. Through inclusion of any one of the binder compositions for a non-aqueous secondary battery set forth above in this manner, flexibility of an electrode formed using the slurry composition for a non-aqueous secondary battery electrode can be sufficiently improved. Moreover, cycle characteristics of a secondary battery that includes the electrode can be sufficiently improved.

Furthermore, the present disclosure aims to advantageously solve the problems set forth above, and a presently disclosed electrode for a non-aqueous secondary battery comprises an electrode mixed material layer formed using the slurry composition for a non-aqueous secondary battery electrode set forth above. By forming an electrode mixed material layer using the slurry composition for a non-aqueous secondary battery electrode set forth above in this manner, it is possible to obtain an electrode that has sufficiently high flexibility and can enhance cycle characteristics of an obtained secondary battery.

Also, the present disclosure aims to advantageously solve the problems set forth above, and a presently disclosed non-aqueous secondary battery comprises a positive electrode, a negative electrode, a separator, and an electrolyte solution, wherein at least one of the positive electrode and the negative electrode is the electrode for a non-aqueous secondary battery set forth above. By using the electrode for a non-aqueous secondary battery set forth above, it is possible to efficiently produce a non-aqueous secondary battery having excellent cycle characteristics.

### (Advantageous Effect)

Through the presently disclosed binder composition for a non-aqueous secondary battery and slurry composition for a non-aqueous secondary battery electrode, it is possible to form an electrode that has sufficiently high flexibility and can enhance cycle characteristics of an obtained secondary battery.

Moreover, according to the present disclosure, it is possible to obtain an electrode for a non-aqueous secondary battery that has sufficiently high flexibility and a non-aqueous secondary battery that includes the electrode and has excellent cycle characteristics.

### BRIEF DESCRIPTION OF THE DRAWING

In the accompanying drawing,

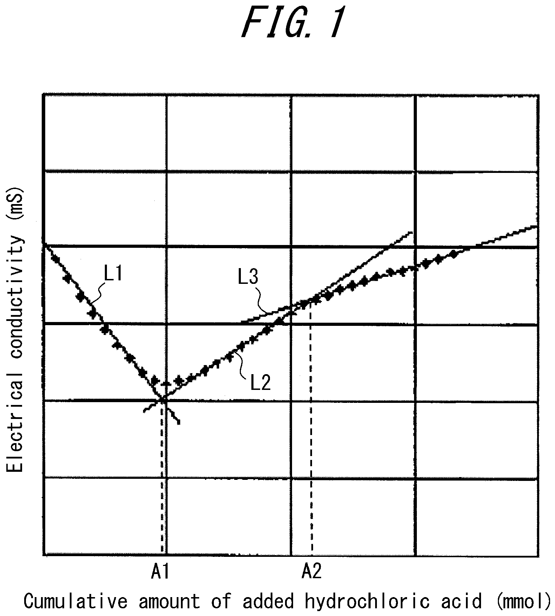

FIG. 1 illustrates one example of a plot used in measurement of surface acid content of a particulate polymer in examples.

### DETAILED DESCRIPTION

The following provides a detailed description of embodiments of the present disclosure.

The presently disclosed binder composition for a non-aqueous secondary battery can be used in production of the presently disclosed slurry composition for a non-aqueous secondary battery electrode. Moreover, a slurry composition for a non-aqueous secondary battery electrode that is produced using the presently disclosed binder composition for a non-aqueous secondary battery can be used in production of an electrode of a non-aqueous secondary battery such as a lithium ion secondary battery. Furthermore, a feature of the presently disclosed non-aqueous secondary battery is that the presently disclosed electrode for a non-aqueous secondary battery formed using the presently disclosed slurry composition for a non-aqueous secondary battery electrode is used therein.

Note that the presently disclosed binder composition for a non-aqueous secondary battery, slurry composition for a non-aqueous secondary battery electrode, and electrode for a non-aqueous secondary battery are preferably for a negative electrode, and the presently disclosed non-aqueous secondary battery is preferably a non-aqueous secondary battery in which the presently disclosed electrode for a non-aqueous secondary battery is used as a negative electrode.

### (Binder composition for non-aqueous secondary battery)

The presently disclosed binder composition for a non-aqueous secondary battery contains a specific particulate polymer and can optionally further contain water as a dispersion medium and other components that can be compounded in binder compositions.

As a result of the particulate polymer including a block copolymer A that is an asymmetric block copolymer, the presently disclosed binder composition can form an electrode that has sufficiently high flexibility and can enhance cycle characteristics of an obtained secondary battery. In recent years, there have been instances in which silicon-based materials have been adopted as electrode active materials from a viewpoint of increasing secondary battery capacity. Since electrode active materials formed of silicon-based materials (hereinafter, also referred to as Si-based electrode active materials) display large expansion and contraction during charging and discharging, it is desirable for an electrode including an electrode mixed material layer that contains a Si-based electrode active material to have even higher flexibility. Accordingly, even when the presently disclosed binder composition is used in combination with a Si-based electrode active material, the excellent flexibility of the presently disclosed binder composition enables good compliance with expansion and contraction of the Si-based electrode active material inside an electrode, and, as a result, enables enhancement of cycle characteristics of a secondary battery.

The reason that a binder composition for a non-aqueous secondary battery that can form an electrode having sufficiently high flexibility is obtained in the present disclosure is not clear but is presumed to be as follows. Firstly, the block copolymer A contained in the presently disclosed binder composition is an asymmetric block copolymer. More specifically, the block copolymer A includes two block regions formed of aromatic vinyl monomer units (hereinafter, also referred to as "aromatic vinyl block regions") that differ in terms of weight-average molecular weight and that are separated by a block region formed of an aliphatic conjugated diene monomer unit (hereinafter, also referred to as an "aliphatic conjugated diene block region"). In the block copolymer A, the aromatic vinyl block region having a smaller weight-average molecular weight is thought to act to soften the block copolymer A, whereas the aromatic vinyl block region having a larger weight-average molecular weight is thought to inhibit excessive softening of the block copolymer A and to effectively inhibit permanent elongation of the block copolymer A becoming large. Consequently, the block copolymer A itself has suitable flexibility while also having strength that enables compliance with deformation of an electrode mixed material layer containing the block copolymer A caused by repeated charging and discharging, and can enhance cycle characteristics of an obtained secondary battery.

### <Particulate polymer>

The particulate polymer is a component that functions as a binder. In an electrode mixed material layer formed using a slurry composition that contains the binder composition, the particulate polymer holds components such as an electrode active material so that the components do not detach from the electrode mixed material layer and enables adhesion of an electrode and a separator via the electrode mixed material layer. The particulate polymer is required to include a specific block copolymer A described further below and preferably further includes a specific block copolymer B described further below, though the inclusion of the block copolymer B is optional.

The particulate polymer is water-insoluble particles formed of a specific polymer. When particles are referred to as "water-insoluble" in the present disclosure, this means that when 0.5 g of the polymer is dissolved in 100 g of water at a temperature of 25°C, insoluble content is 90 mass% or more.

### «Block copolymer A»

The block copolymer A serving as the particulate polymer is particles formed of a copolymer that has a structure represented by the following general formula (A).

Ar1^{a}-D^{a}-Ar2^{a} (A)

(In general formula (A), Ar1^{a} indicates a block region that has a weight-average molecular weight of 5,500 to 20,000 and is formed of an aromatic vinyl monomer unit, Ar2^{a} indicates a block region that has a weight-average molecular weight of 40,000 to 400,000 and is formed of an aromatic vinyl monomer unit, and D^{a} indicates a block region that is formed of an aliphatic conjugated diene monomer unit.)

In the following description, the constituent elements (1) to (3) of the block copolymer A are also referred to as follows.
(1) The block region that has a weight-average molecular weight of 5,500 to 20,000 and is formed of an aromatic vinyl monomer unit is also referred to as "aromatic vinyl block region (Ar1^{a})".
(2) The block region that has a weight-average molecular weight of 40,000 to 400,000 and is formed of an aromatic vinyl monomer unit is also referred to as "aromatic vinyl block region (Ar2^{a})".
(3) The block region that is formed of an aliphatic conjugated diene monomer unit is also referred to as "aliphatic conjugated diene block region (D^{a})" .

As is clear from the weight-average molecular weight ranges for the aromatic vinyl block region (Ar1^{a}) and the aromatic vinyl block region (Ar2^{a}), the block copolymer A includes an aromatic vinyl block region (Ar2^{a}) having a larger weight-average molecular weight and an aromatic vinyl block region (Ar1^{a}) having a smaller weight-average molecular weight. Moreover, as is clear from the preceding general formula (A), the aromatic vinyl block regions (Ar1^{a}, Ar2^{a}) that differ from each other in terms of weight-average molecular weight are separated by the aliphatic conjugated diene block region (D^{a}). In other words, the block copolymer A is a block copolymer that has an asymmetric structure when the aliphatic conjugated diene block region (D^{a}) is taken to be the center thereof.

Note that in addition to the aforementioned regions (Ar1^{a}, D^{a}, Ar2^{a}), the block copolymer A may include other macromolecule chain sections that do not correspond to these regions. However, it is preferable that the block copolymer A does not include other macromolecule chain sections from a viewpoint of effectively inhibiting permanent elongation from becoming large.

### -Aromatic vinyl block regions (Ar1^{a}, Ar2^{a})-

Each of the aromatic vinyl block regions (Ar1^{a}, Ar2^{a}) is a region including a section where only aromatic vinyl monomer units are bonded in a row. Moreover, each of the aromatic vinyl block regions (Ar1^{a}, Ar2^{a}) is a region that includes mainly aromatic vinyl monomer units as repeating units. Note that when a given block region is said to "include mainly" aromatic vinyl monomer units in the present specification, this means that aromatic vinyl monomer units constitute 80 mass% or more when all monomer units included in the given block region are taken to be 100 mass%.

A single aromatic vinyl block region (Ar1^{a}, Ar2^{a}) may be formed of just one type of aromatic vinyl monomer unit or may be formed of a plurality of types of aromatic vinyl monomer units, but is preferably formed of just one type of aromatic vinyl monomer unit.

Aromatic vinyl monomers that can be used to form constituent aromatic vinyl monomer units of the aromatic vinyl block regions (Ar1^{a}, Ar2^{a}) include aromatic vinyl compounds without any specific limitations, examples of which include styrene, α-methylstyrene, 2-methylstyrene, 3-methylstyrene, 4-methylstyrene, 2-ethylstyrene, 3-ethylstyrene, 4-ethylstyrene, 2,4-diisopropylstyrene, 2,4-dimethylstyrene, 4-t-butylstyrene, 5-t-butyl-2-methylstyrene, 2-chlorostyrene, 3-chlorostyrene, 4-chlorostyrene, 4-bromostyrene, 2-methyl-4,6-dichlorostyrene, 2,4-dibromostyrene, and vinylnaphthalene. Of these aromatic vinyl monomers, styrene is preferable. Although one of these aromatic vinyl monomers may be used individually or two or more of these aromatic vinyl monomers may be used in combination, it is preferable that one aromatic vinyl monomer is used individually. The aromatic vinyl block regions (Ar1^{a}, Ar2^{a}) may each be formed of polymerization units formed using the same aromatic vinyl monomer or may be formed of polymerization units formed using different aromatic vinyl monomers.

The aromatic vinyl block region (Ar1^{a}), which is the aromatic vinyl block region having a smaller weight-average molecular weight, is required to have a weight-average molecular weight MW(Ar1^{a}) of not less than 5,500 and not more than 20,000. The weight-average molecular weight MW(Ar1^{a}) is preferably 6,000 or more, and is preferably 15,000 or less, more preferably 13,000 or less, and even more preferably 11,000 or less. When MW(Ar1^{a}) is not less than any of the lower limits set forth above, cycle characteristics of an obtained secondary battery can be enhanced. Moreover, when MW(Ar1^{a}) is not more than any of the upper limits set forth above, excessive hardening of the block copolymer A can be inhibited, and flexibility of an obtained electrode can be increased. Furthermore, MW(Ar1^{a}) being not more than any of the upper limits set forth above makes it easier to comply with expansion and contraction of an electrode accompanying charging and discharging of a secondary battery and can enhance cycle characteristics of a secondary battery.

The aromatic vinyl block region (Ar2^{a}), which is the aromatic vinyl block region having a larger weight-average molecular weight, is required to have a weight-average molecular weight MW(Ar2^{a}) of 40,000 to 400,000. The weight-average molecular weight MW(Ar2^{a}) is preferably not less than 42,000 and not more than 370,000. When MW(Ar2^{a}) is not less than any of the lower limits set forth above, cycle characteristics of an obtained secondary battery can be enhanced. Moreover, when MW(Ar2^{a}) is not more than any of the upper limits set forth above, flexibility of an obtained electrode can be even further increased. Furthermore, when MW(Ar2^{a}) is not more than any of the upper limits set forth above, excessive thickening of a reaction solution during production of the block copolymer A can be inhibited, and ease of production of the block copolymer A can be increased.

Note that the values of MW(Ar1^{a}) and MW(Ar2^{a}) can be adjusted by, for example, suitably altering the amounts of monomers and the amount of a polymerization initiator added in production of the block copolymer A, the amounts of various additives and the amount of polymerization solvent added in polymerization, the polymerization time, and so forth.

Although no specific limitations are placed on a value obtained by dividing the weight-average molecular weight MW(Ar2^{a}) of the aromatic vinyl block region (Ar2^{a}) by the weight-average molecular weight MW(Ar1^{a}) of the aromatic vinyl block region (Ar1^{a}) (i.e., the value of MW(Ar2^{a})/MW(Ar1^{a})), this value is preferably 2.6 or more, and more preferably 4 or more, and is preferably 67 or less, and more preferably 40 or less. When the value of MW(Ar2^{a})/MW(Ar1^{a}) is within any of the ranges set forth above, cycle characteristics of an obtained secondary battery can be even further enhanced. In other words, it is thought that a good balance of an attribute of "small permanent elongation" and an attribute of "low spring-back" can be achieved in the block copolymer A when the value of MW(Ar2^{a})/MW(Ar1^{a}) is within any of the ranges set forth above.

The aromatic vinyl block regions (Ar1^{a}, Ar2^{a}) in the block copolymer A may each include monomer units other than aromatic vinyl monomer units.

Examples of monomers that can be used to form monomer units other than aromatic vinyl monomer units that can be included in the aromatic vinyl block regions (Ar1^{a}, Ar2^{a}) include aliphatic conjugated diene monomers, nitrile group-containing monomers, acidic group-containing monomers and anhydrides thereof, (meth)acrylic acid ester monomers, and aliphatic non-conjugated diene monomers such as 1,2-butadiene and 1,4-pentadiene. In the present disclosure, "(meth)acrylic acid" is used to indicate "acrylic acid" and/or "methacrylic acid". Monomers described further below in description of the block region (D^{a}) can be used as these monomers.

The content of monomer units other than aromatic vinyl monomer units in each of the aromatic vinyl block regions is preferably 20 mass% or less, more preferably 10 mass% or less, and particularly preferably substantially 0 mass%.

### -Block region (D^{a}) formed of aliphatic conjugated diene monomer unit-

The block region that is formed of an aliphatic conjugated diene monomer unit (aliphatic conjugated diene block region (D^{a})) is a region including a section where only aliphatic conjugated diene monomer units are bonded in a row. Moreover, the aliphatic conjugated diene block region (D^{a}) is a region that mainly includes aliphatic conjugated diene monomer units. Note that when a given block region is said to "mainly include" aliphatic conjugated diene monomer units in the present specification, this means that aliphatic conjugated diene monomer units constitute 80 mass% or more when all monomer units included in the given block region are taken to be 100 mass%.

A single aliphatic conjugated diene block region (D^{a}) may be formed of one type of repeating unit or may be formed of a plurality of types of repeating units.

Moreover, a single aliphatic conjugated diene block region (D^{a}) may include a coupling moiety (i.e., constituent repeating units of a single aliphatic conjugated diene block region (D^{a}) may be linked with a coupling moiety interposed in-between).

Furthermore, the aliphatic conjugated diene block region (D^{a}) preferably includes either or both of a graft portion and a cross-linked structure. In particular, it is preferable that the aliphatic conjugated diene block region (D^{a}) includes a graft portion from a viewpoint of increasing viscosity stability of an obtained slurry composition.

Aliphatic conjugated diene monomers that can be used to form aliphatic conjugated diene monomer units include aliphatic conjugated diene compounds without any specific limitations, examples of which include 1,3 -butadiene, isoprene, 2,3-dimethyl-1,3-butadiene, 2-chloro-1,3-butadiene, 1,3-pentadiene, and 1,3-hexadiene.

Of these aliphatic conjugated diene monomers, it is preferable to use 1,3-butadiene and/or isoprene, and particularly preferable to use isoprene.

By using isoprene in formation of the aliphatic conjugated diene block region, adhesive strength of the block copolymer A can be effectively increased.

Note that a cross-linked structure can be introduced into a block region formed of an aliphatic conjugated diene by performing cross-linking of the block region formed of an aliphatic conjugated diene. In other words, an aliphatic conjugated diene block region (D^{a}) that includes a structural unit obtained through cross-linking of an aliphatic conjugated diene monomer unit can be formed through cross-linking of a polymer that includes a block region formed of an aliphatic conjugated diene.

A structural unit obtained through cross-linking of an aliphatic conjugated diene monomer unit can be introduced into the block copolymer A through cross-linking of a polymer that includes a block region formed of an aliphatic conjugated diene.

The cross-linking can be performed using a radical initiator such as a redox initiator that is a combination of an oxidant and a reductant, for example, but is not specifically limited to being performed in this manner. Examples of oxidants that can be used include organic peroxides such as diisopropylbenzene hydroperoxide, cumene hydroperoxide, t-butyl hydroperoxide, 1,1,3,3-tetramethylbutyl hydroperoxide, di-t-butyl peroxide, isobutyryl peroxide, and benzoyl peroxide. Examples of reductants that can be used include compounds that include a metal ion in a reduced state such as ferrous sulfate and copper(I) naphthenate; sulfonic acid compounds such as sodium methanesulfonate; and amine compounds such as dimethylaniline. One of these organic peroxides or reductants may be used individually, or two or more of these organic peroxides or reductants may be used in combination.

Note that the cross-linking may be performed in the presence of a crosslinker such as a polyvinyl compound (divinylbenzene, etc.), a polyallyl compound (diallyl phthalate, triallyl trimellitate, diethylene glycol bis(allyl carbonate), etc.), or any of various glycols (ethylene glycol diacrylate, etc.). Moreover, the cross-linking can be performed through irradiation with active energy rays such as γ-rays.

The aliphatic conjugated diene block region (D^{a}) may include repeating units other than those described above. Specifically, the aliphatic conjugated diene block region (D^{a}) may include other monomer units such as an acidic group-containing monomer unit (carboxyl group-containing monomer unit, sulfo group-containing monomer unit, phosphate group-containing monomer unit, etc.), a nitrile group-containing monomer unit (acrylonitrile unit, methacrylonitrile unit, etc.), a (meth)acrylic acid ester monomer unit (acrylic acid alkyl ester unit, methacrylic acid alkyl ester unit, etc.), or an aliphatic non-conjugated diene monomer unit derived from an aliphatic non-conjugated diene monomer such as given as an example in the section relating to the block regions (Ar1^{a}, Ar2^{a}). Of these examples, it is preferable that the aliphatic conjugated diene block region (D^{a}) of the block copolymer A includes an acidic group-containing monomer unit from a viewpoint of adjusting the surface acid content of the particulate polymer to an appropriate level and improving viscosity stability of a slurry composition produced using the binder composition.

Note that an acidic group included in the acidic group-containing monomer unit may form a salt with an alkali metal, ammonia, or the like.

Examples of carboxyl group-containing monomers that can form carboxyl group-containing monomer units include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, and α-chloro-β-E-methoxyacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid monoesters such as butyl maleate, nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, dimethylmaleic anhydride, and citraconic anhydride.

An acid anhydride that produces a carboxyl group through hydrolysis can also be used as a carboxyl group-containing monomer.

Furthermore, an ethylenically unsaturated polybasic carboxylic acid such as butene tricarboxylic acid, a partial ester of an ethylenically unsaturated polybasic carboxylic acid such as monobutyl fumarate or mono-2-hydroxypropyl maleate, or the like can be used as a carboxyl group-containing monomer.

Examples of sulfo group-containing monomers that can form sulfo group-containing monomer units include styrene sulfonic acid, vinyl sulfonic acid (ethylene sulfonic acid), methyl vinyl sulfonic acid, (meth)allyl sulfonic acid, and 3-allyloxy-2-hydroxypropane sulfonic acid.

Note that in the present disclosure, "(meth)allyl" is used to indicate "allyl" and/or "methallyl".

Examples of phosphate group-containing monomers that can form phosphate group-containing monomer units include 2-(meth)acryloyloxyethyl phosphate, methyl-2-(meth)acryloyloxyethyl phosphate, and ethyl-(meth)acryloyloxyethyl phosphate.

Note that in the present disclosure, "(meth)acryloyl" is used to indicate "acryloyl" and/or "methacryloyl".

One of the monomers described above may be used individually, or two or more of the monomers described above may be used in combination. Moreover, methacrylic acid, itaconic acid, and acrylic acid are preferable, and methacrylic acid is more preferable as an acidic group-containing monomer that can form an acidic group-containing monomer unit.

Other monomers units such as the acidic group-containing monomer unit, nitrile group-containing monomer unit, and (meth)acrylic acid ester monomer unit described above can be introduced into the polymer using any polymerization method, such as graft polymerization, without any specific limitations. Note that in a case in which other monomer units are introduced by graft polymerization, the polymer includes a graft portion and has a structure in which a polymer constituting the graft portion is bonded to a polymer constituting a backbone portion.

The graft polymerization can be performed by a known graft polymerization method without any specific limitations. Specifically, the graft polymerization can be performed using a radical initiator such as a redox initiator that is a combination of an oxidant and a reductant, for example. The oxidant and the reductant can be the same as any of the previously described oxidants and reductants that can be used in cross-linking of the block copolymer A.

Moreover, in a case in which graft polymerization using a redox initiator is to be performed with respect to the block copolymer A, introduction of other monomer units through graft polymerization and aliphatic conjugated diene monomer unit cross-linking can be caused to proceed concurrently. Note that graft polymerization and cross-linking do not have to be caused to proceed concurrently, and the type of radical initiator and the reaction conditions may be adjusted such that only graft polymerization proceeds.

The weight-average molecular weight MW(D^{a}) of the aliphatic conjugated diene block region (D^{a}) is preferably 20,000 or more, more preferably 30,000 or more, and even more preferably 35,000 or more. When MW(D^{a}) is not less than any of the lower limits set forth above, excessive hardening of the block copolymer A can be inhibited to thereby increase flexibility of an obtained electrode. The weight-average molecular weight MW(D^{a}) is preferably 200,000 or less, more preferably 150,000 or less, and even more preferably 100,000 or less from a viewpoint of enhancing cycle characteristics of an obtained secondary battery. Moreover, the weight-average molecular weight MW(D^{a}) is preferably 70,000 or less from a viewpoint of effectively inhibiting spring-back of an obtained electrode mixed material layer from becoming large. Note that the value of MW(D^{a}) can be adjusted by, for example, suitably altering the amounts of monomers and the amount of a polymerization initiator added in production of the block copolymer A, the amounts of various additives, the amount of polymerization solvent, and the amount of coupling agent added in polymerization, the polymerization time, and so forth.

### -Weight-average molecular weight of block copolymer A-

The weight-average molecular weight MW(A) of the block copolymer A is preferably 66,000 or more, more preferably 79,000 or more, and even more preferably 100,000 or more, and is preferably 300,000 or less, and more preferably 200,000 or less. When the value of MW(A) is within any of the ranges set forth above, cycle characteristics of an obtained secondary battery can be even further enhanced. In particular, the value of MW(A) being not more than any of the upper limits set forth above is thought to inhibit irreversible change of the block copolymer A (particulate polymer) caused by stress arising in an electrode mixed material layer due to expansion and contraction of an electrode active material.

### «Block copolymer B»

The block copolymer B serving as the particulate polymer is particles formed of a copolymer that has a structure represented by the following general formula (B).

Arl^{b}-D^{b}- Ar2^{b} (B)

(In general formula (B), Ar1^{b} and Ar2^{b} each indicate, independently of each other, a block region that has a weight-average molecular weight of 6,000 to 20,000 and is formed of an aromatic vinyl monomer unit, and Db indicates a block region that is formed of an aliphatic conjugated diene monomer unit.)

In the following description, the constituent elements (4) to (6) of the block copolymer B are also referred to as follows.

(4) The first block region that has a weight-average molecular weight of 6,000 to 20,000 and is formed of an aromatic vinyl monomer unit is also referred to as "aromatic vinyl block region (Ar1^{b})".

(5) The second block region that has a weight-average molecular weight of 6,000 to 20,000 and is formed of an aromatic vinyl monomer unit is also referred to as "aromatic vinyl block region (Ar2^{b})".

(6) The block region that is formed of an aliphatic conjugated diene monomer unit is also referred to as "aliphatic conjugated diene block region (D^{b})".

Note that in addition to the aforementioned regions (Ar1^{b}, D^{b}, Ar2^{b}), the block copolymer B may include other macromolecule chain sections that do not correspond to these regions. However, it is preferable that the block copolymer B does not include other macromolecule chain sections from a viewpoint of effectively inhibiting permanent elongation from becoming large.

### -Aromatic vinyl block regions (Ar1^{b}, Ar2^{b})-

Each of the aromatic vinyl block regions (Ar1^{b}, Ar2^{b}) is a region that includes mainly aromatic vinyl monomer units as repeating units. In the same way as for the block copolymer A, a single aromatic vinyl block region (Ar1^{b}, Ar2^{b}) may be formed of one type or a plurality of types of aromatic vinyl monomer units, but is preferably formed of just one type of aromatic vinyl monomer unit. Moreover, a single aromatic vinyl block region (Ar1^{b}, Ar2^{b}) may include a coupling moiety.

Examples of aromatic vinyl monomers that can be used to form constituent aromatic vinyl monomer units of the aromatic vinyl block regions (Ar1^{b}, Ar2^{b}) include the various compounds that were previously described in the "Block copolymer A" section. Of these aromatic vinyl monomers, styrene is preferable. In the same way as for the block copolymer A, the aromatic vinyl block regions (Ar1^{b}, Ar2^{b}) may each be formed of polymerization units formed using the same aromatic vinyl monomer or may be formed of polymerization units formed using different aromatic vinyl monomers. Moreover, in the same way as for the block copolymer A, each of the aromatic vinyl block regions (Ar1^{b}, Ar2^{b}) may include monomer units other than aromatic vinyl monomer units. Examples of monomers that can be used to form monomer units other than aromatic vinyl monomer units that can be included in the aromatic vinyl block regions (Ar1^{b}, Ar2^{b}) include the same monomers as the various monomers given as examples in relation to the block copolymer A.

The weight-average molecular weights MW(Ar1^{b}) and MW(Ar2^{b}) of the aromatic vinyl block regions (Ar1^{b}, Ar2^{b}) are each, independently of each other, preferably 6,000 or more, and more preferably 7,000 or more, and preferably 20,000 or less, more preferably 15,000 or less, and even more preferably 13,000 or less. Although the weight-average molecular weights MW(Ar1^{b}) and MW(Ar2^{b}) may be the same or different, it is preferable that they are substantially the same from a viewpoint of effectively inhibiting permanent elongation from becoming large.

When MW(Ar1^{b}) and MW(Ar2^{b}) are not less than any of the lower limits set forth above, cycle characteristics of an obtained secondary battery can be enhanced. Moreover, when MW(Ar1^{b}) and MW(Ar2^{b}) are not more than any of the upper limits set forth above, flexibility of an obtained electrode can be increased. Furthermore, MW(Ar1^{b}) and MW(Ar2^{b}) being not more than any of the upper limits set forth above makes it easier to comply with expansion and contraction of an electrode accompanying charging and discharging of a secondary battery and can enhance cycle characteristics of a secondary battery.

It is also preferable that MW(Ar1^{b}) and MW(Ar2^{b}) are substantially the same as the weight-average molecular weight MW(Ar1^{a}) of the aromatic vinyl block region (Ar1^{a}) included in the previously described block copolymer A. This is because permanent elongation can be effectively inhibited from becoming large, and ease of production of the binder composition can be increased.

### -Block region (D^{b}) formed of aliphatic conjugated diene monomer unit-

The block region that is formed of an aliphatic conjugated diene monomer unit (aliphatic conjugated diene block region (D^{b})) is a region including a section where only aliphatic conjugated diene monomer units are bonded in a row. Moreover, the aliphatic conjugated diene block region (D^{b}) is a region that mainly includes aliphatic conjugated diene monomer units. In the same way as for the previously described block copolymer A, a single aliphatic conjugated diene block region (D^{b}) may be formed of one type or a plurality of types of repeating units. Moreover, the aliphatic conjugated diene block region (D^{b}) may include either or both of a coupling moiety and a graft portion. In particular, it is suitable that the aliphatic conjugated diene block region (D^{b}) includes a graft portion from a viewpoint of increasing viscosity stability of an obtained slurry composition.

Examples of aliphatic conjugated diene monomers that can be used to form aliphatic conjugated diene monomer units of the aliphatic conjugated diene block region (D^{b}) include the various compounds that were previously described in the "Block copolymer A" section. Of these aliphatic conjugated diene monomers, it is preferable to use 1,3-butadiene and/or isoprene, and particularly preferable to use isoprene.

By using isoprene in formation of the aliphatic conjugated diene block region (D^{b}), adhesive strength of the block copolymer B can be effectively increased.

Examples of other repeating units that can be included in the aliphatic conjugated diene block region (D^{b}) include the same various monomer units as in the case of the previously described block copolymer A.

The weight-average molecular weight MW(D^{b}) of the aliphatic conjugated diene block region (D^{b}) is preferably 60,000 or more, and more preferably 90,000 or more, and is preferably 400,000 or less, more preferably 300,000 or less, and even more preferably 200,000 or less. When MW(D^{b}) is not less than any of the lower limits set forth above, excessive hardening of the block copolymer B can be inhibited to thereby increase flexibility of an obtained electrode. Moreover, when MW(D^{b}) is not more than any of the upper limits set forth above, cycle characteristics of an obtained secondary battery can be enhanced.

### <<Ratio of block copolymer A»

The ratio of the block copolymer A when the total mass of the block copolymer A and the block copolymer B contained in the presently disclosed binder composition for a non-aqueous secondary battery is taken to be 100 mass% is preferably 36 mass% or more, more preferably 38 mass% or more, and even more preferably 40 mass% or more, and is preferably 85 mass% or less, more preferably 80 mass% or less, and even more preferably 75 mass% or less. When the ratio of the block copolymer A is not less than any of the lower limits set forth above, flexibility of an obtained electrode can be effectively increased. Moreover, when the ratio of the block copolymer A is not more than any of the upper limits set forth above, spring-back of an obtained electrode mixed material layer can be effectively inhibited from becoming large, and cycle characteristics of an obtained secondary battery can be even further enhanced. Although it is not clear why these advantageous effects are obtained, it is thought that a good balance of an attribute of "small permanent elongation" and an attribute of "low spring-back" can be achieved in an obtained electrode when the ratio of the block copolymer A is within any of the ranges set forth above.

### <<Surface acid content of particulate polymer>>

The surface acid content of the particulate polymer is preferably 0.05 mmol/g or more, more preferably 0.06 mmol/g or more, even more preferably 0.08 mmol/g or more, further preferably 0.10 mmol/g or more, and particularly preferably 0.20 mmol/g or more, and is preferably 0.90 mmol/g or less, more preferably 0.50 mmol/g or less, and even more preferably 0.45 mmol/g or less. When the surface acid content of the particulate polymer is not less than any of the lower limits set forth above, viscosity stability of a slurry composition produced using the binder composition can be increased, and cycle characteristics of an obtained secondary battery can be even further enhanced. On the other hand, when the surface acid content of the particulate polymer is not more than any of the upper limits set forth above, an electrode formed using the binder composition has excellent pressability because spring-back thereof has a low tendency to occur. Moreover, when the surface acid content of the particulate polymer is within any of the ranges set forth above, coatability of a slurry composition can also be improved.

The surface acid content of the particulate polymer can be adjusted by altering the types and amounts of monomers used to produce the block copolymer A and the block copolymer B serving as the particulate polymer. In one specific example, the surface acid content can be increased by increasing the used amount of an acidic group-containing monomer such as a monomer that includes a carboxyl group.

### «Proportional content of vinyl bonds in particulate polymer»

As previously described, the block copolymer A and the block copolymer B serving as the particulate polymer include regions that include aliphatic conjugated diene monomer units. The "proportional content of vinyl bonds" in aliphatic conjugated diene block regions included in these block copolymers A and B is defined as the proportion constituted by 1,2-vinyl bonds and 3,4-vinyl bonds based on all aliphatic conjugated diene monomer units included in the aliphatic conjugated diene block regions. The proportional content of vinyl bonds in the aliphatic conjugated diene block regions is preferably 1 mol% or more, and is preferably 20 mol% or less, and more preferably 10 mol% or less. When the proportional content of vinyl bonds in the aliphatic conjugated diene block regions is not more than any of the upper limits set forth above, cycle characteristics of an obtained secondary battery can be even further enhanced. Note that the "proportional content of vinyl bonds" in aliphatic conjugated diene block regions can be measured by a method described in the EXAMPLES section. Also note that in a case in which the particulate polymer is a polymer obtained through graft polymerization, the "proportional content of vinyl bonds" measured for the pre-grafting particulate polymer is larger than the "proportional content of vinyl bonds" measured for the post-grafting particulate polymer.

### «Volume-average particle diameter of particulate polymer»

The volume-average particle diameter of the particulate polymer is preferably 50 nm or more, more preferably 200 nm or more, and even more preferably 300 nm or more, and is preferably 1,500 nm or less, more preferably 800 nm or less, and even more preferably 500 nm or less. When the volume-average particle diameter of the particulate polymer is not less than any of the lower limits set forth above, ease of production of the particulate polymer can be increased. Moreover, when the volume-average particle diameter of the particulate polymer is not more than any of the upper limits set forth above, performance of the particulate polymer as a binder can be enhanced, and, as a result, cycle characteristics of an obtained secondary battery can be enhanced. Note that the volume-average particle diameter of a particulate polymer can be measured by a method described in the EXAMPLES section.

### <<Proportion constituted by aromatic vinyl monomer units in particulate polymer>>

The proportion constituted by aromatic vinyl monomer units in the particulate polymer when the total mass of the particulate polymer is taken to be 100 mass% is preferably 27 mass% or more, and more preferably 30 mass% or more, and is preferably 70 mass% or less, and more preferably 60 mass% or less. When the proportion constituted by aromatic vinyl monomer units in the particulate polymer is not less than any of the lower limits set forth above, the display of excessively high tackiness by the particulate polymer can be effectively inhibited, and blocking of electrodes can be effectively inhibited from easily occurring in a situation in which electrodes each including an obtained electrode mixed material layer are stacked and stored. On the other hand, when the proportion constituted by aromatic vinyl monomer units in the particulate polymer is not more than any of the upper limits set forth above, flexibility of the particulate polymer can be effectively increased, and flexibility of an obtained electrode can be even further increased. Note that in the block copolymer A and the block copolymer B serving as the particulate polymer, the proportion constituted by aromatic vinyl block regions in each block copolymer is normally the same as the proportion constituted by aromatic vinyl monomer units in that block copolymer.

As previously described, the particulate polymer that is a constituent element of the presently disclosed binder composition includes the specific block copolymer A described above and can suitably include the specific block copolymer B described above. Accordingly, the "surface acid content of the particulate polymer", the "volume-average particle diameter of the particulate polymer", and the "proportion constituted by aromatic vinyl monomer units in the particulate polymer" described above correspond to attribute values of the block copolymer A in a case in which the particulate polymer only includes the block copolymer A and correspond to attribute values of a mixture of the block copolymer A and the block copolymer B in a case in which the particulate polymer includes the block copolymer A and the block copolymer B.

### <<Production method of particulate polymer>>

The particulate polymer can be produced, for example, through a step of block polymerizing monomers such as an aromatic vinyl monomer and an aliphatic conjugated diene monomer described above in an organic solvent to obtain a solution of a specific block copolymer (block copolymer solution production step), a step of adding water to the obtained block copolymer solution and performing emulsification to form particles of the block copolymer (emulsification step), and a step of performing graft polymerization with respect to the particles of the block copolymer to obtain a water dispersion of a particulate polymer formed of a specific copolymer (grafting step).

Note that the grafting step may be performed before the emulsification step in production of the particulate polymer. In other words, the particulate polymer may be produced by, after the block polymer solution production step, implementing a step of performing graft polymerization with respect to the block polymer contained in the block polymer solution that is obtained to obtain a solution of a specific polymer (grafting step) and subsequently implementing a step of adding water to the obtained solution of the specific polymer and performing emulsification to form particles of the specific polymer (emulsification step).

### -Block copolymer solution production step-

The block copolymer solution production step can be performed, for example, using an organic solvent, a polymerization initiator, various additives, and so forth disclosed in WO2009/123089A1 under conditions also disclosed in the aforementioned document. More specifically, in the block copolymer solution production step:
(1) a polymerization initiator is used to polymerize an aromatic vinyl monomer in an organic solvent so as to obtain an aromatic vinyl polymer having active terminals;
(2) an aliphatic conjugated diene monomer is added to a solution containing the obtained aromatic vinyl polymer having active terminals so as to obtain an aromatic vinyl-aliphatic conjugated diene block copolymer having active terminals;
(3) a difunctional coupling agent is added to a solution containing the obtained aromatic vinyl-aliphatic conjugated diene block copolymer having active terminals in an amount such that functional groups are less than 1 molar equivalent of active terminals so as to form the block copolymer B; and
(4) an aromatic vinyl monomer is added and further polymerized so as to form the block copolymer A and obtain a block copolymer solution.

In the block copolymer solution that is obtained through the operations (1) to (4) described above, the block copolymer A and the block copolymer B are present in a mixed state. Note that in a case in which only the block copolymer A is to be synthesized, for example, operation (3) described above can be omitted.

### -Emulsification step-

Although no specific limitations are placed on the method of emulsification in the emulsification step, a method in which phase-inversion emulsification is performed with respect to a preliminary mixture of a block copolymer solution obtained in the block copolymer solution production step described above and an aqueous solution of an emulsifier is preferable, for example. Note that the phase-inversion emulsification can be carried out using a known emulsifier and emulsifying and dispersing device, for example. Specific examples of emulsifying and dispersing devices that can be used include, but are not specifically limited to, batch emulsifying and dispersing devices such as a Homogenizer (product name; produced by IKA), a Polytron (product name; produced by Kinematica AG), and a TK Auto Homo Mixer (product name; produced by Tokushu Kika Kogyo Co., Ltd.); continuous emulsifying and dispersing devices such as a TK Pipeline-Homo Mixer (product name; produced by Tokushu Kika Kogyo Co., Ltd.), a Colloid Mill (product name; produced by Shinko Pantec Co., Ltd.), a Thrasher (product name; produced by Nippon Coke & Engineering Co., Ltd.), a Trigonal Wet Fine Grinding Mill (product name; produced by Mitsui Miike Chemical Engineering Machinery Co., Ltd.), a Cavitron (product name; produced by EUROTEC Ltd.), a Milder (product name; produced by Pacific Machinery & Engineering Co., Ltd.), and a Fine Flow Mill (product name; produced by Pacific Machinery & Engineering Co., Ltd.); high-pressure emulsifying and dispersing devices such as a Microfluidizer (product name; produced by Mizuho Industrial Co., Ltd.), a Nanomizer (product name; produced by Nanomizer Inc.), and an APV Gaulin (product name; produced by Gaulin); membrane emulsifying and dispersing devices such as a Membrane Emulsifier (product name; produced by Reica Co., Ltd.); vibratory emulsifying and dispersing devices such as a Vibro Mixer (product name; produced by Reica Co., Ltd.); and ultrasonic emulsifying and dispersing devices such as an Ultrasonic Homogenizer (product name; produced by Branson). The conditions (processing temperature, processing time, etc.) of the emulsifying operation performed using the emulsifying and dispersing device are not specifically limited and may be selected as appropriate so as to obtain a desired dispersion state.

A known method may be used to remove organic solvent from the emulsion obtained after phase-inversion emulsification as necessary, for example, so as to yield a water dispersion of a block copolymer that has been formed into particles.

### -Grafting step-

Although no specific limitations are placed on the method of graft polymerization in the grafting step, a method in which a radical initiator such as a redox initiator is used to cause graft polymerization and cross-linking of the block polymer to proceed concurrently in the presence of a monomer that is to be graft polymerized, for example, is preferable.

The reaction conditions can be adjusted depending on the chemical composition of the block copolymer, the desired surface acid content, and so forth.

In the grafting step, it is possible to obtain a water dispersion of a particulate polymer. Note that in a case in which the grafting step is performed after the emulsification step (i.e., in which graft polymerization is performed with respect to a block copolymer that has been formed into particles), monomer units such as acidic group-containing monomer units that are introduced through graft polymerization are present to a greater degree toward the surface of the particulate polymer than at the center of the particulate polymer, and thus are concentrated in a surface layer portion of the particulate polymer.

### <Dispersion medium>

The dispersion medium contained in the binder composition may be water, but is not specifically limited thereto. Alternatively, the dispersion medium may be an aqueous solution or a mixed solution of water and a small amount of an organic solvent.

### <Other components>

Examples of other components that can be contained in the binder composition include, but are not specifically limited to, components such as reinforcing materials, leveling agents, viscosity modifiers, and additives for electrolyte solution. One of these components may be used individually, or two or more of these components may be used in combination in a freely selected ratio.

### <Production method of binder composition>

The presently disclosed binder composition can be produced by mixing the particulate polymer and other components that are optionally used in the dispersion medium without any specific limitations. Note that in a situation in which a dispersion liquid of the particulate polymer is used in production of the binder composition, liquid content of this dispersion liquid may be used as the dispersion medium of the binder composition.

### (Slurry composition for non-aqueous secondary battery electrode)

The presently disclosed slurry composition is a composition that is used for forming an electrode mixed material layer of an electrode. The presently disclosed slurry composition contains the binder composition set forth above and further contains an electrode active material. In other words, the presently disclosed slurry composition contains the previously described particulate polymer and an electrode active material, and optionally further contains other components. As a result of the presently disclosed slurry composition containing the binder composition set forth above, an electrode that includes an electrode mixed material layer formed from the slurry composition has sufficiently high flexibility and can enhance cycle characteristics of an obtained secondary battery.

### <Binder composition>

The presently disclosed binder composition set forth above, which contains a specific particulate polymer, is used as a binder composition.

No specific limitations are placed on the amount of the binder composition in the slurry composition. For example, the amount of the binder composition can be set as an amount such that, in terms of solid content, the amount of the particulate polymer is not less than 0.5 parts by mass and not more than 15 parts by mass per 100 parts by mass of the electrode active material.

### <Electrode active material>

Any known electrode active material that is used in a secondary battery can be used as the electrode active material without any specific limitations. Specifically, examples of electrode active materials that can be used in an electrode mixed material layer of a lithium ion secondary battery, which is one example of a secondary battery, include the following electrode active materials, but are not specifically limited thereto.

### <<Positive electrode active material>>

Examples of positive electrode active materials that can be compounded in a positive electrode mixed material layer of a positive electrode in a lithium ion secondary battery include compounds that include a transition metal such as transition metal oxides, transition metal sulfides, and complex metal oxides of lithium and transition metals. Examples of the transition metal include Ti, V, Cr, Mn, Fe, Co, Ni, Cu, and Mo.

Specific examples of positive electrode active materials include, but are not specifically limited to, lithium-containing cobalt oxide (LiCoO₂), lithium manganate (LiMn₂O₄), lithium-containing nickel oxide (LiNiO₂), a lithium-containing complex oxide of Co-Ni-Mn, a lithium-containing complex oxide of Ni-Mn-Al, a lithium-containing complex oxide of Ni-Co-Al, olivine-type lithium iron phosphate (LiFePO₄), olivine-type lithium manganese phosphate (LiMnPO₄), a lithium-rich spinel compound represented by Li₁₊ₓMn₂₋ₓO₄ (0 < x < 2), Li[Ni_{0.17}Li_{0.2}Co_{0.07}Mn_{0.56}]O₂, and LiNi_{0.5}Mn_{1.5}O₄.

One of the positive electrode active materials described above may be used individually, or two or more of the positive electrode active materials described above may be used in combination.

### <<Negative electrode active material>>

Examples of negative electrode active materials that can be compounded in a negative electrode mixed material layer of a negative electrode in a lithium ion secondary battery include carbon-based negative electrode active materials, metal-based negative electrode active materials, and negative electrode active materials that are combinations thereof.

A carbon-based negative electrode active material can be defined as an active material that contains carbon as its main framework and into which lithium can be inserted (also referred to as "doping"). Specific examples of carbon-based negative electrode active materials include carbonaceous materials such as coke, mesocarbon microbeads (MCMB), mesophase pitch-based carbon fiber, pyrolytic vapor-grown carbon fiber, pyrolyzed phenolic resin, polyacrylonitrile-based carbon fiber, quasi-isotropic carbon, pyrolyzed furfuryl alcohol resin (PFA), and hard carbon, and graphitic materials such as natural graphite and artificial graphite.

A metal-based negative electrode active material is an active material that contains metal, the structure of which usually contains an element that allows insertion of lithium, and that has a theoretical electric capacity per unit mass of 500 mAh/g or more when lithium is inserted. Examples of metal-based active materials include lithium metal; a simple substance of metal that can form a lithium alloy (for example, Ag, Al, Ba, Bi, Cu, Ga, Ge, In, Ni, P, Pb, Sb, Si, Sn, Sr, Zn, or Ti); and oxides, sulfides, nitrides, silicides, carbides, and phosphides of lithium metal and the simple substance of metal. Further examples include oxides such as lithium titanate.

One of the negative electrode active materials described above may be used individually, or two or more of the negative electrode active materials described above may be used in combination.

### <Other components>

Examples of other components that can be compounded in the slurry composition include, but are not specifically limited to, conductive materials and the same components as other components that can be compounded in the presently disclosed binder composition. One other component may be used individually, or two or more other components may be used in combination in a freely selected ratio.

### <Production of slurry composition>

No specific limitations are placed on the method by which the slurry composition is produced.

For example, the slurry composition can be produced by mixing the binder composition, the electrode active material, and other components that are used as necessary in the presence of an aqueous medium.

Note that the aqueous medium used in production of the slurry composition also includes the aqueous medium that was contained in the binder composition. The mixing method is not specifically limited and may be mixing performed using a typically used stirrer or disperser.

### (Electrode for non-aqueous secondary battery)

The presently disclosed electrode for a non-aqueous secondary battery includes an electrode mixed material layer formed using the slurry composition for a non-aqueous secondary battery electrode set forth above. Accordingly, the electrode mixed material layer is formed of a dried product of the slurry composition set forth above, normally contains an electrode active material and a component derived from the particulate polymer, and optionally contains other components. It should be noted that components contained in the electrode mixed material layer are components that were contained in the slurry composition for a non-aqueous secondary battery electrode. Furthermore, the preferred ratio of these components in the electrode mixed material layer is the same as the preferred ratio of these components in the slurry composition. Although the particulate polymer is present in a particulate form in the slurry composition, the particulate polymer may have a particulate form or any other form in the electrode mixed material layer that is formed using the slurry composition.

As a result of the electrode mixed material layer being formed using the slurry composition for a non-aqueous secondary battery electrode set forth above, the presently disclosed electrode for a non-aqueous secondary battery has sufficiently high flexibility and can enhance cycle characteristics of an obtained secondary battery.

### <Production of electrode for non-aqueous secondary battery>

The electrode mixed material layer of the presently disclosed electrode for a non-aqueous secondary battery can, for example, be formed by any of the following methods.
(1) A method in which the presently disclosed slurry composition is applied onto the surface of a current collector and is then dried
(2) A method in which a current collector is immersed in the presently disclosed slurry composition and is then dried
(3) A method in which the presently disclosed slurry composition is applied onto a releasable substrate and is dried to produce an electrode mixed material layer that is then transferred onto the surface of a current collector

Of these methods, method (1) is particularly preferable since it allows simple control of the thickness of the electrode mixed material layer. In more detail, method (1) includes a step of applying the slurry composition onto the current collector (application step) and a step of drying the slurry composition that has been applied onto the current collector to form an electrode mixed material layer on the current collector (drying step).

### [Application step]

The slurry composition can be applied onto the current collector by any commonly known method without any specific limitations. Specific examples of application methods that can be used include doctor blading, dip coating, reverse roll coating, direct roll coating, gravure coating, extrusion coating, and brush coating. During application, the slurry composition may be applied onto one side or both sides of the current collector. The thickness of the slurry coating on the current collector after application but before drying may be set as appropriate in accordance with the thickness of the electrode mixed material layer to be obtained after drying.

The current collector onto which the slurry composition is applied is a material having electrical conductivity and electrochemical durability. Specifically, the current collector may, for example, be made of iron, copper, aluminum, nickel, stainless steel, titanium, tantalum, gold, platinum, or the like. One of these materials may be used individually, or two or more of these materials may be used in combination in a freely selected ratio.

### [Drying step]

The slurry composition on the current collector can be dried by any commonly known method without any specific limitations. Examples of drying methods that can be used include drying by warm, hot, or low-humidity air; drying in a vacuum; and drying by irradiation with infrared light, electron beams, or the like. Drying of the slurry composition on the current collector in this manner can form an electrode mixed material layer on the current collector and thereby provide an electrode for a non-aqueous secondary battery that includes the current collector and the electrode mixed material layer.

After the drying step, the electrode mixed material layer may be further subjected to a pressing process, such as mold pressing or roll pressing. This pressing process can improve close adherence of the electrode mixed material layer and the current collector and can further densify the resultant electrode mixed material layer. Furthermore, in a case in which the electrode mixed material layer contains a curable polymer, the polymer is preferably cured after the electrode mixed material layer has been formed.

### (Non-aqueous secondary battery)

The presently disclosed non-aqueous secondary battery includes a positive electrode, a negative electrode, an electrolyte solution, and a separator, wherein the electrode for a non-aqueous secondary battery set forth above is used as at least one of the positive electrode and the negative electrode. The presently disclosed non-aqueous secondary battery has excellent cycle characteristics as a result of the electrode for a non-aqueous secondary battery set forth above being used as at least one of the positive electrode and the negative electrode.

Although the following describes, as one example, a case in which the secondary battery is a lithium ion secondary battery, the presently disclosed secondary battery is not limited to the following example.

### <Electrodes>

Examples of electrodes other than the presently disclosed electrode for a non-aqueous secondary battery set forth above that can be used in the presently disclosed non-aqueous secondary battery include known electrodes used in production of secondary batteries without any specific limitations. Specifically, an electrode obtained by forming an electrode mixed material layer on a current collector by a known production method, for example, can be used as an electrode other than the presently disclosed electrode for a non-aqueous secondary battery set forth above.

### <Electrolyte solution>

The electrolyte solution is normally an organic electrolyte solution obtained by dissolving a supporting electrolyte in an organic solvent. The supporting electrolyte of the lithium ion secondary battery may, for example, be a lithium salt. Examples of lithium salts that can be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆, LiClO₄, and CF₃SO₃Li are preferable as they readily dissolve in solvents and exhibit a high degree of dissociation. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

No specific limitations are placed on the organic solvent used in the electrolyte solution so long as the supporting electrolyte can dissolve therein. Examples of organic solvents that can suitably be used include carbonates such as dimethyl carbonate (DMC), ethylene carbonate (EC), diethyl carbonate (DEC), propylene carbonate (PC), butylene carbonate (BC), ethyl methyl carbonate (EMC), and vinylene carbonate (VC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region. In general, lithium ion conductivity tends to increase when a solvent having a low viscosity is used. Therefore, lithium ion conductivity can be adjusted through the type of solvent that is used.

The concentration of the electrolyte in the electrolyte solution may be adjusted as appropriate. Furthermore, known additives may be added to the electrolyte solution.

### <Separator>

Examples of separators that can be used include, but are not specifically limited to, those described in JP2012-204303A. Of these separators, a microporous membrane made of polyolefinic (polyethylene, polypropylene, polybutene, or polyvinyl chloride) resin is preferred because such a membrane can reduce the total thickness of the separator, which increases the ratio of electrode active material in the secondary battery, and consequently increases the volumetric capacity.

The presently disclosed secondary battery can be produced by, for example, stacking the positive electrode and the negative electrode with the separator in-between, performing rolling, folding, or the like of the resultant laminate as necessary in accordance with the battery shape to place the laminate in a battery container, injecting the electrolyte solution into the battery container, and sealing the battery container. In the presently disclosed non-aqueous secondary battery, the electrode for a non-aqueous secondary battery set forth above is used as at least one of the positive electrode and the negative electrode, and is preferably used as the negative electrode. The presently disclosed non-aqueous secondary battery may be provided with an overcurrent preventing device such as a fuse or a PTC device; an expanded metal; or a lead plate as necessary in order to prevent pressure increase inside the secondary battery and occurrence of overcharging or overdischarging. The shape of the secondary battery may be a coin type, button type, sheet type, cylinder type, prismatic type, flat type, or the like.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through polymerization of a plurality of types of monomers, the proportion in the polymer constituted by monomer units formed through polymerization of a given monomer is normally, unless otherwise specified, the same as the ratio (charging ratio) of the given monomer among all monomers used in polymerization of the polymer.

Measurements of various attributes in the examples and comparative examples were performed by methods described below. Moreover, various evaluations in the examples and comparative examples were performed in accordance with methods described below.

### <Weight-average molecular weights of block copolymers A and B>

For a water dispersion of a particulate polymer produced in each example or comparative example, weight-average molecular weight was determined as polystyrene-equivalent molecular weight through high-performance liquid chromatography using tetrahydrofuran with a flow rate of 0.35 mL/min as a carrier. An HLC8220 produced by Tosoh Corporation was used as an apparatus, three linked Shodex KF-404HQ columns (column temperature: 40°C) produced by Showa Denko K.K. were used as a column, a differential refractometer and a UV detector were used as detectors, and molecular weight calibration was performed using 12 points for standard polystyrene (500 to 3,000,000) produced by Polymer Laboratories Ltd.

### <Mass ratio of block copolymer A and block copolymer B>

The mass ratio of a block copolymer A and a block copolymer B was determined from the areas of peaks respectively corresponding to the block copolymers A and B in a chart obtained in measurement of "Weight-average molecular weights of block copolymers A and B" described above.

### <Weight-average molecular weights of aromatic vinyl block regions (Ar1^{a}, Ar2^{a}, Ar1^{b}, Ar2^{b}) included in block copolymers A and B>

In accordance with a method described in "Rubber Chemistry and Technology, Volume 45, pp 1295 (1972)", block copolymers A and B obtained in each example or comparative example were reacted with ozone and were reduced by lithium aluminum hydride so as to cause decomposition of isoprene polymer blocks (aliphatic conjugated diene block regions) in the block copolymers A and B.

The specific procedure was as follows. A water dispersion (binder composition) of a particulate polymer obtained in each example or comparative example was dried in an environment having an absolute humidity of 50% and a temperature of 23°C to 25°C so as to produce a polymer film of 3 ± 0.3 mm in thickness as a sample. After loading 100 mL of dichloromethane that had been treated using a molecular sieve into a reactor, 300 mg of the sample was dissolved therein. The reactor was loaded into a cooling tank, was adjusted to -25°C, and then oxygen was passed inside the reactor at a flow rate of 170 mL/min while feeding ozone produced by an ozonizer into the reactor. Once 30 minutes had passed from the start of the reaction, gas flowing out from the reactor was fed into potassium iodide aqueous solution in order to confirm that the reaction was complete.

Next, a separate reactor that had been purged with nitrogen was charged with 50 mL of diethyl ether and 470 mg of lithium aluminum hydride, and the reactor was cooled by ice water while the solution that had been reacted with ozone was added dropwise into the reactor. The reactor was placed in a water bath, was gradually heated, and was refluxed at 40°C for 30 minutes. Thereafter, the solution was stirred while dilute hydrochloric acid was added dropwise into the reactor, little by little, and this dropwise addition was continued until almost no evolution of hydrogen was observed. After this reaction, a solid product that had been produced in the solution was filtered, and the solid product was then extracted using 100 mL of diethyl ether for 10 minutes. The resultant extract was combined with a filtrate obtained in the filtration, and then solvent was evaporated to obtain a solid sample. The sample obtained as described above was subjected to measurement of weight-average molecular weight in accordance with the previously described measurement method of weight-average molecular weight, and the measured value was taken to be the weight-average molecular weight of styrene blocks (aromatic vinyl block regions).

### <Weight-average molecular weights of aliphatic conjugated diene block regions (D^{a}, D^{b}) included in block copolymers A and B>

The weight-average molecular weights of aromatic vinyl block regions in a block copolymer A or block copolymer B were subtracted from the weight-average molecular weight of the block copolymer A or block copolymer B determined as described above, and then the weight-average molecular weight of an aliphatic conjugated diene block region was determined based on the calculated value.

### <Proportion constituted by aromatic vinyl monomer units in each of block copolymers A and B>

The proportion (mass%) constituted by aromatic vinyl monomer units in each of block copolymers A and B was determined based on a detection intensity ratio of the differential refractometer and the UV detector in measurement by high-performance liquid chromatography described above. Note that a plurality of types of copolymers having different styrene unit (aromatic vinyl monomer unit) contents were prepared and were used to prepare a calibration curve in advance.

For each value for the weight-average molecular weight of an aromatic vinyl block region (Ar1^{a}, Ar2^{a}, Ar1^{b}, Ar2^{b}) obtained in the "Weight-average molecular weights of aromatic vinyl block regions (Ar1^{a}, Ar2^{a}, Ar1^{b}, Ar2^{b}) included in block copolymers A and B" section, a judgment as to which block copolymer the block region for which the value corresponds belongs to was made based on the proportions constituted by aromatic vinyl monomer units in the block copolymers A and B that were obtained in this measurement.

### <Proportional content of vinyl bonds in particulate polymer>

A block copolymer solution obtained through a block copolymer solution production step was subjected to measurement by proton NMR in order to measure the proportional content (mol%) of vinyl bonds in aliphatic conjugated diene block regions (D^{a}, D^{b}). The measurement result indicates the proportion (mol%) in which vinyl bonds are included in aliphatic conjugated diene block regions (D^{a}, D^{b}) for the overall particulate polymer (i.e., overall for a block copolymer A and a block copolymer B in examples other than Example 7 and Comparative Example 1, for a block copolymer A in Example 7, and for a block copolymer B in Comparative Example 1).

### <Surface acid content of particulate polymer>

A water dispersion (binder composition) of a particulate polymer obtained in each example or comparative example was diluted with 0.3% dodecylbenzenesulfonic acid aqueous solution and was adjusted to a solid content concentration of 10%. Thereafter, centrifugal separation was performed for 30 minutes at 7,000 G to collect light liquid. The obtained light liquid was diluted with 0.3% dodecylbenzenesulfonic acid aqueous solution and was adjusted to a solid content concentration of 10%. Thereafter, centrifugal separation was performed for 30 minutes at 7,000 G to collect light liquid. The obtained light liquid was diluted with 0.3% dodecylbenzenesulfonic acid aqueous solution and was adjusted to a solid content concentration of 10%. Thereafter, centrifugal separation of the adjusted sample was performed for 30 minutes at 7,000 G to collect light liquid. The obtained light liquid was adjusted to pH 12.0 with 5% sodium hydroxide aqueous solution. The pH adjusted sample, in an amount of 3.0 g in terms of solid content, was collected in a 100 mL beaker, and then 3 g of an aqueous solution of EMULGEN 120 (produced by Kao Corporation) diluted to 0.2% and 1 g of an aqueous solution of SM5512 (produced by Dow Corning Toray Co., Ltd.) diluted to 1% were added thereto. These materials were uniformly stirred by a stirrer while 0.1 N hydrochloric acid aqueous solution was added thereto at a rate of 0.5 mL/30 s and while electrical conductivity was measured at intervals of 30 seconds.

The obtained electrical conductivity data was plotted as a graph with electrical conductivity on a vertical axis (Y coordinate axis) and cumulative amount of added hydrochloric acid on a horizontal axis (X coordinate axis). In this manner, a hydrochloric acid amount-electrical conductivity curve with three inflection points such as illustrated in FIG. 1 was obtained. The X coordinates of the three inflection points were denoted as P1, P2, and P3 in order from the smallest value. Linear approximations L1, L2, and L3 were determined by the least squares method for data in three sections corresponding to X coordinates of: zero to coordinate P1; coordinate P1 to coordinate P2; and coordinate P2 to coordinate P3. An X coordinate of an intersection point of the linear approximation L1 and the linear approximation L2 was taken to be A1, and an X coordinate of an intersection point of the linear approximation L2 and the linear approximation L3 was taken to be A2.

The surface acid content per 1 g of the particulate polymer was determined as a hydrochloric acid-equivalent value (mmol/g) from the following formula (a).
(a) Surface acid content per 1 g of particulate polymer = (A2 - A1)/3.0 g

### <Volume-average particle diameter of particulate polymer>

A water dispersion (binder composition) of a particulate polymer obtained in each example or comparative example was adjusted to a solid content concentration of 0.1 mass%, and then a laser diffraction particle diameter distribution analyzer (produced by Beckman Coulter, Inc.; product name: LS-230) was used to measure a particle diameter distribution (by volume) for the water dispersion of the polymer that had been solid content concentration adjusted. In the obtained particle diameter distribution, the particle diameter at which cumulative volume calculated from the small diameter end of the distribution reached 50% was determined and was taken to be the volume-average particle diameter (D50) of the particulate polymer.

### <Viscosity stability of slurry composition>

In production of a slurry composition, a solution prior to addition of a binder composition was sampled and the viscosity thereof M0 (mPa·s) was measured using a B-type viscometer (produced by Toki Sangyo Co., Ltd.; product name: TV-25) under conditions of a measurement temperature of 25°C, a No. 4 measurement rotor, and a rotor speed of 60 rpm.

In addition, the slurry composition obtained after addition of the binder composition was sampled, was loaded into a vessel having a diameter of 5.5 cm and a height of 8.0 cm, and was stirred at a rotation speed of 3,000 rpm for 10 minutes using a TK Homo Disper (produced by PRIMIX Corporation; disper blade diameter: 40 mm). The viscosity M1 (mPa·s) of the slurry composition after stirring was measured in the same way as the viscosity M0 of the solution prior to addition of the binder composition.

A viscosity change rate ΔM (= {(M1 - M0)/M0} × 100%) was calculated and was evaluated in accordance with the following standard. A smaller viscosity change rate ΔM indicates that the slurry composition has higher viscosity stability.
A: Viscosity change rate ΔM of less than 10%
B: Viscosity change rate ΔM of 10% or more

### <Electrode flexibility>

A rod was placed at a negative electrode mixed material layer-side of a negative electrode for a lithium ion secondary battery obtained in each example or comparative example, the negative electrode was wound around the rod, and the presence or absence of cracking of the negative electrode mixed material layer was evaluated. This was performed for rods of different diameters. When a negative electrode can be wound around a rod of smaller diameter without cracking, this indicates that the negative electrode has excellent flexibility and excellent windability. When windability is excellent, cycle characteristics of a secondary battery are also excellent because peeling of the negative electrode mixed material layer can be inhibited.
A: Diameter of smallest rod for which cracking does not occur upon winding is 1.2 mm
B: Diameter of smallest rod for which cracking does not occur upon winding is 1.5 mm
C: Diameter of smallest rod for which cracking does not occur upon winding is 2 mm
D: Diameter of smallest rod for which cracking does not occur upon winding is 3 mm

### <Spring-back of electrode mixed material layer>

The spring-back of an electrode mixed material layer was evaluated based on electrode density. Specifically, the negative electrode mixed material layer-side of a negative electrode web produced in each example or comparative example was first roll pressed with a line pressure of 11 t (tons) in an environment having a temperature of 25 ± 3°C to adjust the electrode mixed material layer density to 1.70 g/cm³. The negative electrode was subsequently left in an environment having a temperature of 25 ± 3°C and a relative humidity of 50 ± 5% for 1 week. The electrode mixed material layer density (g/cm³) of the negative electrode after being left was measured and was evaluated by the following standard. A higher electrode mixed material layer density after being left indicates that spring-back has not occurred, that pressability is excellent, and that the electrode could be effectively densified.
A: Electrode mixed material layer density after being left of 1.65 g/cm³ or more
B: Electrode mixed material layer density after being left of less than 1.65 g/cm³

### <Cycle characteristics>

A lithium ion secondary battery obtained in each example or comparative example was subjected to a charge/discharge cycling test in which it was charged to 4.2 V by a constant current and subsequently charged by a constant voltage by a 0.5C constant-current constant-voltage charging method, and was then discharged to 3.0 V by a 0.5C constant current at 60°C. This charge/discharge cycling test was performed for 100 cycles, and a ratio of the discharge capacity of the 100^{th} cycle relative to the initial discharge capacity was taken to be the capacity maintenance rate. The capacity maintenance rate was evaluated by the following standard. A larger capacity maintenance rate indicates less reduction of capacity through repeated charging and discharging.
A: Capacity maintenance rate of 90% or more
B: Capacity maintenance rate of not less than 80% and less than 90%
C: Capacity maintenance rate of not less than 75% and less than 80%
D: Capacity maintenance rate of less than 75%

### (Example 1)

### <Production of particulate polymer>

### «Block copolymer solution production step»

### • Operation (1)

A pressure-resistant reactor was charged with 20.0 kg of cyclohexane as a polymerization solvent, 2.2 mmol of N,N,N',N'-tetramethylethylenediamine (hereinafter, referred to as "TMEDA") as a Lewis base compound added with the aim of block structure production, and 1.50 kg of styrene as an aromatic vinyl monomer. These materials were stirred at 40°C while 149.6 mmol of n-butyllithium as a polymerization initiator was added thereto, and then 1 hour of polymerization was performed under heating at 50°C to yield a styrene polymer as an aromatic vinyl polymer having active terminals. The polymerization conversion rate of styrene was 100%.

### • Operation (2)

Next, 6.50 kg of isoprene as an aliphatic conjugated diene monomer was continuously added into the reactor over 1 hour while performing temperature control to maintain a temperature of 50°C to 60°C. The polymerization reaction was continued for 1 hour more after addition of the isoprene was complete to yield a styrene-isoprene block copolymer as an aromatic vinyl-aliphatic conjugated diene block copolymer having active terminals. The polymerization conversion rate of isoprene was 100%.

### • Operation (3)

Next, 47.1 mmol of dimethyldichlorosilane as a coupling agent was added and a coupling reaction was carried out for 2 hours to form a styrene-isoprene-styrene block copolymer that corresponds to a block copolymer B.

### • Operation (4)

Next, 2.10 kg of styrene as an aromatic vinyl monomer was continuously added over 1 hour while performing temperature control to maintain a temperature of 50°C to 60°C. The polymerization reaction was continued for 1 hour more after addition of the styrene was complete to form a styrene-isoprene-styrene block copolymer that corresponds to a block copolymer A. The polymerization conversion rate of styrene was 100%.

### • Operation (5)

Next, 299.1 mmol of methanol was added as a polymerization inhibitor and was thoroughly mixed to terminate the reaction.

A portion of the reaction liquid (block copolymer solution) obtained as described above was sampled and was used to measure various attributes in accordance with the previously described methods. The results are shown in Table 1.

### «Emulsification step (phase-inversion emulsification step)»

A mixture obtained by mixing sodium alkylbenzene sulfonate, sodium polyoxyethylene alkyl sulfosuccinate, and sodium polyoxyethylene alkyl ether sulfate in a ratio of 1:1:1 (by mass) was dissolved in deionized water to produce a 5% aqueous solution.

A tank was charged with 500 g of the obtained block polymer solution and 500 g of the obtained aqueous solution, and preliminary mixing of these materials was performed by stirring. Next, a metering pump was used to transfer the preliminary mixture from the tank to a continuous high-performance emulsifying and dispersing device (produced by Pacific Machinery & Engineering Co., Ltd.; product name: Milder MDN303V) at a rate of 100 g/min, and the preliminary mixture was stirred at a rotation speed of 15,000 rpm to cause phase-inversion emulsification of the preliminary mixture and obtain an emulsion.

Cyclohexane in the obtained emulsion was subsequently vacuum evaporated in a rotary evaporator. The emulsion resulting from this evaporation was left to separate for 1 day in a chromatographic column equipped with a stop-cock, and a lower layer portion after separation was removed to perform concentration.

Finally, the upper layer portion was filtered through a 100-mesh screen to obtain a water dispersion (block polymer latex) containing a particulate block polymer.

### «Grafting step»

In a grafting step, cross-linking was caused to proceed concurrently in addition to graft polymerization. The block polymer latex obtained in the emulsification step was diluted through addition of 850 parts of distilled water relative to 100 parts in terms of solid content of the block polymer latex. The diluted block polymer latex was then loaded into a stirrer-equipped polymerization reactor that had been subjected to nitrogen purging, and was heated to a temperature of 30°C under stirring.

A separate vessel was used to produce a dilute methacrylic acid solution by mixing 10 parts of methacrylic acid as an acidic group-containing monomer and 16 parts of distilled water. The dilute methacrylic acid solution was added over 30 minutes into the polymerization reactor that had been heated to 30°C.

A separate vessel was used to produce a solution containing 7 parts of distilled water and 0.01 parts of ferrous sulfate (produced by Chubu Chelest Co., Ltd.; product name: Frost Fe) as a reductant. After adding the obtained solution into the polymerization reactor, 0.5 parts of 1,1,3,3 -tetramethylbutyl hydroperoxide (produced by NOF Corporation; product name: PEROCTA H) as an oxidant was further added, and a reaction was carried out at 30°C for 1 hour and then at 70°C for 2 hours. The polymerization conversion rate was 99%.

This yielded a water dispersion (binder composition) of a particulate polymer formed of a polymer obtained through graft polymerization and cross-linking of the block polymer.

The obtained water dispersion of the particulate polymer was used to measure various attributes of the particulate polymer. The results are shown in Table 1.

### <Production of slurry composition for non-aqueous secondary battery negative electrode>

A mixture was obtained by adding 100 parts of artificial graphite (capacity: 360 mAh/g) as a negative electrode active material, 1 part of carbon black (produced by TIMCAL; product name: Super C65) as a conductive material, and 1.2 parts in terms of solid content of a 2% aqueous solution of carboxymethyl cellulose (produced by Nippon Paper Industries Co., Ltd.; product name: MAC-350HC) as a thickener into a planetary mixer equipped with a disper blade. The resultant mixture was adjusted to a solid content concentration of 60% with deionized water and was subsequently mixed at 25°C for 60 minutes. Next, the mixture was adjusted to a solid content concentration of 52% with deionized water and was then further mixed at 25°C for 15 minutes to obtain a mixed liquid. Deionized water and 2.0 parts in terms of solid content of a binder composition composed of the water dispersion produced as described above were added to the obtained mixed liquid, and the final solid content concentration was adjusted to 48%. Further mixing was performed for 10 minutes, and then a defoaming process was carried out under reduced pressure to yield a slurry composition for a negative electrode having good fluidity.

Slurry composition viscosity stability was evaluated during production of the slurry composition for a negative electrode. The result is shown in Table 1.

### <Formation of negative electrode>

The obtained slurry composition for a negative electrode was applied onto copper foil of 15 µm in thickness serving as a current collector by a comma coater such as to have a coating weight after drying of 11 mg/cm². The applied slurry composition was dried by conveying the copper foil inside a 60°C oven for 2 minutes at a speed of 0.5 m/min. Thereafter, 2 minutes of heat treatment was performed at 120°C to obtain a negative electrode web. The obtained negative electrode web was evaluated in accordance with the previously described method to obtain an evaluation result for spring-back of the electrode (negative electrode) mixed material layer. The result is shown in Table 1.

The negative electrode web was rolled by roll pressing to obtain a negative electrode having a negative electrode mixed material layer density of 1.75 g/cm³.

The obtained negative electrode was evaluated in accordance with the previously described method to obtain an evaluation result for electrode flexibility. The result is shown in Table 1.

### <Formation of positive electrode>

A slurry composition for a positive electrode was obtained by mixing 100 parts of LiCoO₂ having a volume-average particle diameter of 12 µm as a positive electrode active material, 2 parts of acetylene black (produced by Denka Company Limited; product name: HS-100) as a conductive material, 2 parts in terms of solid content of polyvinylidene fluoride (produced by Kureha Corporation; product name: #7208) as a binder, and N-methylpyrrolidone as a solvent such that the total solid content concentration was 70%, and then mixing these materials using a planetary mixer.

The obtained slurry composition for a positive electrode was applied onto aluminum foil of 20 µm in thickness serving as a current collector by a comma coater such as to have a coating weight after drying of 23 mg/cm². The applied slurry composition was dried by conveying the aluminum foil inside a 60°C oven for 2 minutes at a speed of 0.5 m/min. Thereafter, 2 minutes of heat treatment was performed at 120°C to obtain a positive electrode web.

The positive electrode web was rolled by roll pressing to obtain a positive electrode having a positive electrode mixed material layer density of 4.0 g/cm³.

### <Preparation of separator>

A separator made from a single layer of polypropylene (produced by Celgard, LLC.; product name: Celgard 2500) was prepared as a separator composed of a separator substrate.

### <Production of lithium ion secondary battery>

The obtained positive electrode was cut out as a rectangle of 49 cm × 5 cm and was placed with the surface at the positive electrode mixed material layer-side thereof facing upward. The separator was cut out as 120 cm × 5.5 cm and was arranged on the positive electrode mixed material layer such that the positive electrode was positioned at a longitudinal direction left-hand side of the separator. In addition, the obtained negative electrode was cut out as a rectangle of 50 cm × 5.2 cm and was arranged on the separator such that the surface at the negative electrode mixed material layer-side thereof faced toward the separator and such that the negative electrode was positioned at a longitudinal direction right-hand side of the separator. The resultant laminate was wound by a winding machine to obtain a roll. The obtained roll was then pressed. The roll was enclosed in an aluminum packing case serving as a battery case, electrolyte solution (solvent: ethylene carbonate/diethyl carbonate/vinylene carbonate = 68.5/30/1.5 (volume ratio); electrolyte: LiPF₆ of 1 M in concentration) was injected such that no air remained, and an opening of the aluminum packing case was closed by heat sealing at 150°C to thereby produce a wound lithium ion secondary battery having a capacity of 800 mAh. Good operation of this lithium ion secondary battery was confirmed. Cycle characteristics of the obtained secondary battery were evaluated as previously described. The result is shown in Table 1.

### (Examples 2 to 4 and Comparative Example 2)

In the block copolymer solution production step, the amounts of styrene, isoprene, n-butyllithium, TMEDA, dimethyldichlorosilane, methanol, and so forth that were added were appropriately changed as necessary such that a block copolymer A contained in the resultant block copolymer solution satisfied configuration conditions indicated in Table 1. With the exception of this point, various operations, measurements, and evaluations were performed in the same way as in Example 1. The results are shown in Table 1.

### (Example 5)

In the block copolymer solution production step, the amount of the coupling agent added in operation (3) was changed such that the mass ratio of block copolymers A and B contained in the resultant block copolymer solution was as indicated in Table 1. With the exception of this point, various operations, measurements, and evaluations were performed in the same way as in Example 1. The results are shown in Table 1.

### (Example 6)

In the grafting step, the amount of methacrylic acid that was added was changed such that the surface acid content of the particulate polymer was as indicated in Table 1. With the exception of this point, various operations, measurements, and evaluations were performed in the same way as in Example 1. The results are shown in Table 1.

### (Example 7)

In the block copolymer solution production step, operation (3) in which a specific amount of a coupling agent was added to the solution containing the aromatic vinyl-aliphatic conjugated diene block copolymer having active terminals was not performed. With the exception of this point, various operations, measurements, and evaluations were performed in the same way as in Example 1. The results are shown in Table 1.

### (Comparative Example 1)

In the block copolymer solution production step, operation (3) in which a specific amount of a coupling agent was added to the solution containing the aromatic vinyl-aliphatic conjugated diene block copolymer having active terminals was not performed. Moreover, the amounts of styrene, isoprene, n-butyllithium, TMEDA, methanol, and so forth added in other operations were appropriately changed as necessary such that a block copolymer B contained in the block copolymer solution satisfied a configuration indicated in Table 1. With the exception of these points, various operations, measurements, and evaluations were performed in the same way as in Example 1. The results are shown in Table 1.

**Table 1**

| | | | | | Examples | | | | | | | Comparative Examples | |
|---|---|---|---|---|---|---|---|---|---|---|---|---|---|
| | | | | | 1 | 2 | 3 | 4 | 5 | 6 | 7 | 1 | 2 |
| | | | Ar1^{a} | Type of aromatic vinyl | Styrene | Styrene | Styrene | Styrene | Styrene | Styrene | Styrene | - | Styrene |
| | | | | Weight-average molecular weight MW(Ar1^{a}) [-] | 10000 | 6000 | 12000 | 18000 | 10000 | 10000 | 10000 | - | 5000 |
| | | Block copolymer A | D^{a} | Type of aliphatic conjugated diene | Isoprene | Isoprene | Isoprene | Isoprene | Isoprene | Isoprene | Isoprene | - | Isoprene |
| | | | | Weight-average molecular weight MW(D^{a}) [-] | 39000 | 73000 | 22000 | 70200 | 39000 | 39000 | 39000 | - | 39000 |
| | | | Ar2^{a} | Type of aromatic vinyl | Styrene | Styrene | Styrene | Styrene | Styrene | Styrene | Styrene | - | Styrene |
| | | | | Weight-average molecular weight MW(Ar2^{a}) [-] | 75000 | 45000 | 90000 | 135000 | 75000 | 75000 | 75000 | - | 500000 |
| | | | MW(Ar2^{a})/MW(Ar1^{a}) [-] | | 7.50 | 7.50 | 7.50 | 7.50 | 7.50 | 7.50 | 7.50 | - | 100.00 |
| | Particulate polymer (binder composition) | | Weight-average molecular weight MW(A) of block copolymer A | | 124000 | 124000 | 124000 | 223200 | 124000 | 124000 | 124000 | - | 544000 |
| Slurry composition | | Block copolymer B | Ar1^{b} ard Ar2^{b} | Type of aromatic vinyl | Styrene | Styrene | Styrene | Styrene | Styrene | Styrene | - | Styrene | Styrene |
| | | | | Weight-average molecular weight Mw(Ar1^{b}, Ar2^{b}) [-] | 9000 | 9000 | 9000 | 9000 | 9000 | 9000 | - | 9000 | 9000 |
| | | | D^{b} | Type of aliphatic conjugated diene | Isoprene | Isoprene | Isoprene | Isoprene | Isoprene | Isoprene | - | Isoprene | Isoprene |
| | | | | Weight-average molecular weight MW(D^{b}) [-] | 131000 | 131000 | 131000 | 131000 | 131000 | 131000 | - | 131000 | 131000 |
| | | Polymer mass ratio (AB) [-] | | | 50:50 | 50:50 | 50:50 | 50:50 | 85:15 | 50:50 | 100:0 | 0:100 | 50:50 |
| | | Surface acid content [mmol/g] | | | 0.3 | 0.3 | 0.3 | 0.3 | 0.3 | 0.1 | 0.3 | 0.3 | 0.3 |
| | | Vinyl bond content [mol%] | | | 7 | 7 | 7 | 7 | 7 | 7 | - | 7 | 7 |
| | | Volume-average particle diameter [nm] | | | 400 | 400 | 400 | 400 | 400 | 400 | 400 | 400 | 400 |
| | | Graft portion | | | Yes | Yes | Yes | Yes | Yes | Yes | Yes | Yes | Yes |
| | Negative electrode active material (artificial graphite) [parts by mass] | | | | 100 | 100 | 100 | 100 | 100 | 100 | 100 | 100 | 100 |
| Evaluation | Viscosity stability of slurry | | | | A | A | A | A | A | B | A | A | A |
| | Electrode flexibility | | | | A | A | B | B | A | A | A | D | C |
| | Spring-back | | | | A | B | A | B | B | A | B | B | B |
| | Cycle characteristics | | | | A | A | A | B | B | B | B | D | D |

It can be seen from Table 1 that in each of Examples 1 to 7 in which a negative electrode was formed using a binder composition containing a particulate polymer that included at least an asymmetric block copolymer A satisfying a specific configuration, the negative electrode had sufficiently high flexibility and could enhance cycle characteristics of an obtained secondary battery. It can also be seen from Table 1 that in Comparative Example 1 in which the used binder composition contained a particulate polymer that did not include an asymmetric block copolymer and in Comparative Example 2 in which the used binder composition contained a particulate polymer that, instead of the specific block copolymer, included a block copolymer that had an asymmetric structure but in which the molecular weights of aromatic vinyl block regions were outside of specific ranges, results in terms of flexibility of an obtained negative electrode and cycle characteristics of a secondary battery were significantly poorer than in Examples 1 to 7.

### INDUSTRIAL APPLICABILITY

According to the present disclosure, it is possible to provide a binder composition for a non-aqueous secondary battery and a slurry composition for a non-aqueous secondary battery electrode with which it is possible to form an electrode that has sufficiently high flexibility and can enhance cycle characteristics of an obtained secondary battery.

Moreover, according to the present disclosure, it is possible to provide an electrode for a non-aqueous secondary battery that has sufficiently high flexibility and a non-aqueous secondary battery that includes the electrode and has excellent cycle characteristics.

## Claims

1. A binder composition for a non-aqueous secondary battery comprising a particulate polymer including a block copolymer A represented by general formula (A), shown below,
Ar1^{a}-D^{a}-Ar2^{a} (A)
where, in general formula (A), Ar1^{a} indicates a block region that has a weight-average molecular weight of 5,500 to 20,000 and is formed of an aromatic vinyl monomer unit, Ar2^{a} indicates a block region that has a weight-average molecular weight of 40,000 to 400,000 and is formed of an aromatic vinyl monomer unit, and D^{a} indicates a block region that is formed of an aliphatic conjugated diene monomer unit, the weight-average molecular weights being determined according to the Example <Weight-average molecular weights of aromatic vinyl block regions (Ar1^{a}, Ar2^{a}, Ar1^{b}, Ar2^{b}) included in block copolymers A and B>.

2. The binder composition for a non-aqueous secondary battery according to claim 1, wherein the particulate polymer further includes a block copolymer B represented by general formula (B), shown below,
Ar1^{b}-D^{b}-Ar2^{b} (B)
where, in general formula (B), Ar1^{b} and Ar2^{b} each indicate, independently of each other, a block region that has a weight-average molecular weight of 6,000 to 20,000 and is formed of an aromatic vinyl monomer unit, the weight-average molecular weight being determined according to the Example <Weight-average molecular weights of aromatic vinyl block regions (Ar1^{a}, Ar2^{a}, Ar1^{b}, Ar2^{b}) included in block copolymers A and B>, and D^{b} indicates a block region that is formed of an aliphatic conjugated diene monomer unit, and
a ratio of the block copolymer A is not less than 36 mass% and not more than 85 mass% when total mass of the block copolymer A and the block copolymer B is taken to be 100 mass%.

3. The binder composition for a non-aqueous secondary battery according to claim 1 or 2, wherein the particulate polymer has a surface acid content of not less than 0.05 mmol/g and not more than 0.90 mmol/g, the surface acid content being determined according to the Example <Surface acid content of particulate polymer>.

4. A slurry composition for a non-aqueous secondary battery electrode comprising: an electrode active material; and the binder composition for a non-aqueous secondary battery according to any one of claims 1 to 3.

5. An electrode for a non-aqueous secondary battery comprising an electrode mixed material layer formed using the slurry composition for a non-aqueous secondary battery electrode according to claim 4.

6. A non-aqueous secondary battery comprising a positive electrode, a negative electrode, a separator, and an electrolyte solution, wherein
at least one of the positive electrode and the negative electrode is the electrode for a non-aqueous secondary battery according to claim 5.

## Patentansprüche

1. Eine Bindemittelzusammensetzung für eine nichtwässrige Sekundärbatterie umfassend ein partikelförmiges Polymer umfassend ein Blockcopolymer A umfasst, repräsentiert durch die unten gezeigte allgemeine Formel (A),
Ar1^{a}-D^{a}-Ar2^{a} (A)
wobei in der allgemeinen Formel (A) Ar1^{a} eine Blockregion bezeichnet, welche ein gewichtsgemitteltes Molekulargewicht von 5500 bis 20000 hat und aus einer aromatischen Vinylmonomereinheit hergestellt ist, Ar2^{a} eine Blockregion bezeichnet, welche ein gewichtsgemitteltes Molekulargewicht von 40000 bis 400000 hat und aus einer aromatischen Vinylmonomereinheit hergestellt ist, und D^{a} eine Blockregion bezeichnet, welche aus einer aliphatischen konjugierten Dienmonomereinheit hergestellt ist, wobei die gewichtsgemittelten Molekulargewichte bestimmt werden gemäß dem Beispiel "Weight-average molecular weights of aromatic vinyl block regions (Ar1^{a}, Ar2^{a}, Ar1^{b}, Ar2^{b}) included in block copolymers A and B".

2. Die Bindemittelzusammensetzung für eine nichtwässrige Sekundärbatterie gemäß Anspruch 1, wobei das partikelförmige Polymer außerdem ein Blockcopolymer B umfasst, repräsentiert durch die unten gezeigte allgemeine Formel (B),
Ar1^{b}-D^{b}-Ar2^{b} (B)
wobei in der allgemeinen Formel (B) Ar1^{b} und Ar2^{b} jeweils unabhängig voneinander eine Blockregion bezeichnen, welche ein gewichtsgemitteltes Molekulargewicht von 6000 bis 20000 hat und aus einer aromatischen Vinylmonomereinheit hergestellt ist, wobei das gewichtsgemittelte Molekulargewicht bestimmt wird gemäß dem Beispiel "Weight-average molecular weights of aromatic vinyl block regions (Ar1^{a}, Ar2^{a}, Ar1^{b}, Ar2^{b}) included in block copolymers A and B", und D^{b} eine Blockregion bezeichnet, welche aus einer aliphatischen konjugierten Dienmonomereinheit hergestellt ist, und
ein Anteil des Blockcopolymers A nicht weniger als 36 Gew.-% und nicht mehr als 85 Gew.-% beträgt, wenn das Gesamtgewicht aus Blockcopolymer A und Blockcopolymer B mit 100 Gew.-% angesetzt wird.

3. Die Bindemittelzusammensetzung für eine nichtwässrige Sekundärbatterie gemäß Anspruch 1 oder 2, wobei das partikelförmige Polymer einen Oberflächensäuregehalt von nicht weniger als 0,05 mmol/g und nicht mehr als 0,90 mmol/g aufweist, wobei der Oberflächensäuregehalt bestimmt wird gemäß dem Beispiel "Surface acid content of particulate polymer".

4. Eine Schlämmezusammensetzung für eine Elektrode einer nichtwässrigen Sekundärbatterie, umfassend: ein elektrodenaktives Material; und die Bindemittelzusammensetzung für eine nichtwässrige Sekundärbatterie gemäß irgendeinem der Ansprüche 1 bis 3.

5. Eine Elektrode für eine nichtwässrige Sekundärbatterie umfassend eine Mixed-Material-Elektrodenschicht, hergestellt unter Verwendung der Schlämmezusammensetzung für eine Elektrode einer nichtwässrigen Sekundärbatterie gemäß Anspruch 4.

6. Eine nichtwässrige Sekundärbatterie umfassend eine positive Elektrode, eine negative Elektrode, einen Separator und eine Elektrolytlösung, wobei
wenigstens eine der positiven Elektrode und der negativen Elektrode die Elektrode für eine nichtwässrige Sekundärbatterie gemäß Anspruch 5 ist.

## Revendications

1. Composition de liant pour une batterie secondaire non aqueuse comprenant un polymère particulaire comprenant un copolymère séquencé A représenté par la formule générale (A), représentée ci-dessous,
Ar1^{a}-D^{a}-Ar2^{a} (A)
où, dans la formule générale (A), Ar1^{a} indique une région de séquence qui a un poids moléculaire moyen en poids de 5 500 à 20 000 et se compose d'un motif monomère de vinyle aromatique, Ar2^{a} indique une région de séquence qui a un poids moléculaire moyen en poids de 40 000 à 400 000 et se compose d'un motif monomère de vinyle aromatique, et D^{a} indique une région de séquence qui est formée d'un motif monomère de diène conjugué aliphatique, les poids moléculaires moyens en poids étant déterminés selon l'exemple <Poids moléculaires moyens en poids des régions de séquence de vinyle aromatique (Ar1^{a}, Ar2^{a}, Ar1^{b}, Ar2^{b}) comprises dans les copolymères séquencés A et B>.

2. Composition de liant pour une batterie secondaire non aqueuse selon la revendication 1, dans laquelle le polymère particulaire comprend en outre un copolymère séquencé B représenté par la formule générale (B), représentée ci-dessous,
Ar1^{b}-D^{b}-Ar2^{b} (B)
où, dans la formule générale (B), Ar1^{b} et Ar2^{b} indiquent chacun, indépendamment l'un de l'autre, une région de séquence qui a un poids moléculaire moyen en poids de 6 000 à 20 000 et se compose d'un motif monomère de vinyle aromatique, les poids moléculaires moyens en poids étant déterminés selon l'exemple <Poids moléculaires moyens en poids des régions de séquence de vinyle aromatique (Ar1^{a}, Ar2^{a}, Ar1^{b}, Ar2^{b}) comprises dans les copolymères séquencés A et B>, et D^{b} indique une région de séquence qui se compose d'un motif monomère de diène conjugué aliphatique, et
un rapport du copolymère séquencé A n'est pas inférieur à 36 % en masse et n'est pas supérieur à 85 % en masse lorsque la masse totale du copolymère séquencé A et du copolymère séquencé B est considérée comme étant de 100 % en masse.

3. Composition de liant pour une batterie secondaire non aqueuse selon la revendication 1 ou 2, dans laquelle le polymère particulaire a une teneur en acide superficiel non inférieure à 0,05 mmol/g et non supérieure à 0,90 mmol/g, la teneur en acide superficiel étant déterminée selon l'exemple <Teneur en acide superficiel de polymère particulaire>.

4. Composition en suspension pour une électrode de batterie secondaire non aqueuse comprenant : un matériau actif d'électrode ; et la composition de liant pour une batterie secondaire non aqueuse selon l'une quelconque des revendications 1 à 3.

5. Électrode pour une batterie secondaire non aqueuse comprenant une couche de matériau mixte d'électrode formée en utilisant la composition en suspension pour une électrode de batterie secondaire non aqueuse selon la revendication 4.

6. Batterie secondaire non aqueuse comprenant une électrode positive, une électrode négative, un séparateur et une solution électrolytique, dans laquelle
au moins l'une parmi l'électrode positive et l'électrode négative est l'électrode pour une batterie secondaire non aqueuse selon la revendication 5.
